# FASCICULE DE BREVET EUROPEEN

(11) **EP 4 115 073 B1**
(45) Date de publication et mention de la délivrance du brevet: **24.07.2024**
(21) Numéro de dépôt: 21707332.9
(22) Date de dépôt: 02.02.2021
(51) Int. Cl.: F02K 5/00, B64D 27/02

(54) **TURBOMACHINE D'AÉRONEF AVEC UN COMPRESSEUR HYBRIDE**
FLUGZEUGTURBINENTRIEBWERK MIT EINEM HYBRIDVERDICHTER
AIRCRAFT TURBINE ENGINE WITH A HYBRID COMPRESSOR

(30) Priorité: 03.03.2020 FR 2002121
(43) Date de publication de la demande: 11.01.2023
(73) Titulaire: SAFRAN, 75015 Paris (FR)
(72) Inventeur: PARMENTIER, Nicolas Claude, 77550 MOISSY-CRAMAYEL (FR); RIERA, William Henri Joseph, 77550 MOISSY-CRAMAYEL (FR)
(74) Mandataire: Gevers & Orès
(86) Numéro de dépôt international: PCT/FR2021/050181
(87) Numéro de publication internationale: WO 2021/176152

(56) Documents cités:
- EP-A2- 3 667 042
- US-A1- 2009 289 456
- US-A1- 2014 364 265
- US-A1- 2019 145 322

## Description

### Domaine technique de l'invention

L'invention est relative au domaine général des turbomachines d'aéronef et notamment des turbomachines de type turboréacteur à double corps et double flux. Elle se rapporte, en particulier, à une turbomachine d'aéronef qui comporte, à l'aval du compresseur basse pression de son corps basse pression, une machine électrique coaxiale au corps basse pression et configurée pour entraîner en rotation une couronne d'aubes mobiles.

### Arrière-plan technique

L'état de la technique comprend notamment les documents US-A1-2019/145322, US-A1-2009/289456 et US-A1-2014/364265.

De manière classique, une turbomachine d'aéronef de type turboréacteur à double corps (i.e. avec un corps basse pression et un corps haute pression) comprend d'amont en aval, dans le sens d'écoulement des gaz, une soufflante, un compresseur basse pression, un compresseur haute pression, une chambre de combustion, une turbine haute pression et une turbine basse pression. Le rotor du compresseur basse pression est entraîné par le rotor de la turbine basse pression, et le rotor du compresseur haute pression est entraîné par le rotor de la turbine haute pression.

Dans ce type de turbomachine, le compresseur basse pression (aussi appelé booster) doit pouvoir fonctionner sur une grande plage de régime de fonctionnement, allant typiquement de 25% à 105% de son régime de fonctionnement nominal. En particulier, un enjeu est d'éviter, sur toute cette plage de régime de fonctionnement, le phénomène connu de pompage, qui provoque un mauvais écoulement des gaz dans la turbomachine voire une inversion du sens d'écoulement de ces gaz.

Cet objectif contraint le design du compresseur basse pression. En effet, typiquement, pour garantir un bon fonctionnement du compresseur, y compris à bas régime, on intègre une géométrie variable à la turbomachine ou des moyens de décharger les aubages. Dans le cas le plus courant, la turbomachine comporte une vanne de décharge située en aval du compresseur basse pression dans le sens d'écoulement des gaz, appelée communément VBV (de l'anglais « *Variable Bleed Valve* ») ou vanne de décharge variable. Dans certains cas, elle comprend aussi une roue directrice d'entrée (RDE) à calage variable.

Dans tous les cas, l'ajout de tels systèmes vise à mieux contrôler l'écoulement du flux dans le compresseur basse pression quel que soit son régime de fonctionnement. Toutefois, leur intégration dégrade la qualité de la veine aérodynamique (du fait de l'introduction de jeu, de fentes, de fuites) et se traduit donc aussi par une dégradation des performances de la turbomachine à son point de fonctionnement nominal. En outre, l'ajout de géométries variables (VBV, RDE,...) compense une partie des pertes d'opérabilité du compresseur basse pression mais pas la totalité. En effet, leur débattement (i.e. leur capacité à modifier l'écoulement du flux) reste limité par des contraintes d'intégration, et entraîne des capacités correctrices elles aussi limitées. Cette problématique reste d'ailleurs inchangée pour une turbomachine équipée d'un réducteur dont le rôle est uniquement d'imposer un ratio de vitesse constant entre la soufflante et le compresseur basse pression de la turbomachine. La plage de vitesse, et donc la plage de régime de fonctionnement du compresseur basse pression, reste toujours dictée par la turbine basse pression.

Par ailleurs, il existe des turbomachines dites triple corps dans lesquelles un compresseur intermédiaire voit son rotor entraîné par une turbine indépendante de la soufflante et du corps haute pression. Toutefois, bien que la plage de régime de fonctionnement de ce compresseur soit réduite pour être comprise entre celle du compresseur haute pression et celle du compresseur basse pression elle reste large et nécessite toujours l'intégration d'une vanne de décharge.

Le brevet FR 2842565 B1 décrit une turbomachine qui intègre une machine électrique dans son enceinte avant. Cette machine électrique peut fournir un couple au rotor du compresseur basse pression dans la mesure où le rotor de la machine électrique et celui du compresseur sont solidaires. Cette injection de puissance sur le rotor du compresseur basse pression permet d'optimiser ses performances dans certains régimes de fonctionnement mais dégrade en contrepartie l'opérabilité du compresseur haute pression (i.e. la plage de régime de fonctionnement dans laquelle il opère de manière optimale). Une telle approche impose donc de réaliser un compromis.

De manière générale, les alternatives connues jusqu'ici à l'utilisation d'une géométrie variable, qui s'appuient sur une machine électrique pour améliorer les performances du compresseur basse pression, améliorent l'opérabilité du compresseur basse pression mais dégradent celle de la soufflante et/ou du compresseur haute pression.

### Résumé de l'invention

La présente invention propose une solution, reposant sur l'utilisation d'une machine électrique, permettant d'entraîner en rotation une couronne d'aubes mobiles, situées en aval du compresseur basse pression, de manière à générer un flux d'air indépendamment de la vitesse de rotation du rotor du compresseur.

À cet effet, selon un premier aspect, l'invention concerne une turbomachine d'aéronef comportant au moins une chambre de combustion et un corps, en particulier basse pression, ledit corps comprenant, en amont de ladite chambre, un compresseur, en particulier basse pression, axial destiné à délivrer de l'air à ladite chambre et, en aval de ladite chambre, une turbine recevant des gaz chauds de ladite chambre et destinée à entraîner le rotor dudit compresseur, ledit compresseur comportant au moins un étage de compression présentant une première couronne d'aubes fixes solidaires d'un carter et une première couronne d'aubes mobiles s'étendant radialement à la périphérie dudit rotor du compresseur,
ladite turbomachine étant caractérisée en ce qu'elle comporte en outre, en aval dudit compresseur et en amont de ladite chambre, au moins une machine électrique coaxiale ou parallèle audit corps, dont le stator est solidaire dudit carter et dont le rotor entraîne en rotation une seconde couronne d'aubes mobiles configurée pour générer un flux d'air lorsqu'elle est mise en rotation, ledit rotor de la machine électrique étant en outre guidé en rotation par au moins un palier solidaire dudit carter de sorte que la vitesse de rotation dudit rotor de la machine électrique est indépendante de la vitesse de rotation du rotor du compresseur.

Le dispositif selon l'invention peut comprendre une ou plusieurs des caractéristiques suivantes, prises isolément les unes des autres ou en combinaison les unes avec les autres :
- la turbomachine est de type à double corps, et dans lequel un compresseur haute pression d'un corps haute pression est situé en aval du compresseur basse pression et de la machine électrique et en amont de la chambre de combustion, ladite turbomachine étant en outre à double flux avec un corps basse pression et un corps haute pression situés dans une veine de circulation d'un flux primaire.
- la machine électrique est de type annulaire et comporte un arbre creux configuré pour entraîner en rotation la seconde couronne d'aubes mobiles.
- la turbomachine comporte une pluralité de machines électriques configurées pour mettre en rotation, par l'intermédiaire d'engrenages, la seconde couronne d'aubes mobiles.
- le compresseur comporte une pluralité d'étages de compression, la machine électrique étant située en aval du dernier étage dudit compresseur et en amont de la chambre de combustion, le rotor de la machine électrique tournant dans le même sens de rotation que le rotor dudit compresseur et une seconde couronne d'aubes fixes étant située en aval et attenante à la seconde couronne d'aubes mobiles.
- le compresseur comporte un seul étage de compression constitué d'une portion radiale d'une soufflante de la turbomachine, la machine électrique étant située en aval dudit étage et une seconde couronne d'aubes fixes étant située en aval et attenante à la seconde couronne d'aubes mobiles.
- le compresseur comporte une pluralité d'étages de compression, chaque étage de compression comportant une couronne d'aubes mobiles, la machine électrique étant située en aval et attenante à la dernière couronne d'aubes mobiles dudit compresseur et le sens de rotation du rotor de ladite machine électrique étant opposé à celui du rotor du compresseur.
- une seconde couronne d'aubes fixes est située en aval et attenante à la seconde couronne d'aubes mobiles.

L'invention concerne également, selon un deuxième aspect, un procédé de commande d'une machine électrique d'une turbomachine d'aéronef selon le premier aspect, ledit procédé comprenant les étapes suivantes, exécutées par une unité de commande :
a) réception de données caractéristiques d'un point de fonctionnement de la turbomachine à un instant déterminé ;
b) détermination, à partir des données reçues, d'un régime de fonctionnement cible de la machine électrique ;
c) détermination, à partir du régime de fonctionnement cible, d'une puissance cible de la machine électrique ;
d) comparaison de la puissance instantanée de la machine électrique et de la puissance cible déterminée et, si la différence entre la puissance instantanée et la puissance cible est inférieure à un seuil déterminé, retour à l'étape b), sinon,
e) modification du régime de fonctionnement de la machine électrique destinée à atteindre la puissance cible ; et,
f) détermination, de la puissance instantanée de la machine électrique et retour à l'étape d).

En outre, les données caractéristiques d'un point de fonctionnement de la turbomachine peuvent comprendre, au moins l'une des données suivantes :
- le régime de fonctionnement du compresseur basse pression de la turbomachine ;
- le régime de fonctionnement du compresseur haute pression de la turbomachine ;
- la pression mesurée en entrée du compresseur haute pression de la turbomachine ;
- la pression mesurée en entrée du compresseur basse pression de la turbomachine ;
- la température mesurée en entrée du compresseur basse pression de la turbomachine ; et,
- la température mesurée en entrée du compresseur haute pression de la turbomachine.

### Brève description des figure

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
[Fig. 1] la figure 1 est une description schématique simplifiée d'une turbomachine d'aéronef selon un mode de réalisation de l'invention ;
[Fig. 2] la figure 2 est une demi-coupe schématique de l'avant d'une turbomachine d'aéronef selon un premier mode de réalisation de l'invention ;
[Fig. 3] la figure 3 est une représentation schématique de modes de réalisation de machines électriques selon l'invention ;
[Fig. 4] la figure 4 est une demi-coupe schématique de l'avant d'une turbomachine d'aéronef selon un deuxième mode de réalisation de l'invention ;
[Fig. 5] la figure 5 est une demi-coupe schématique de l'avant d'une turbomachine d'aéronef selon un troisième mode de réalisation de l'invention ;
[Fig. 6] la figure 6 est une demi-coupe schématique de l'avant d'une turbomachine d'aéronef selon un quatrième mode de réalisation de l'invention ;
[Fig. 7] la figure 7 est un diagramme d'étape d'un procédé de commande d'une turbomachine d'aéronef selon un mode de mise en oeuvre de l'invention.

Les éléments ayant les mêmes fonctions dans les différents modes de réalisation ont les mêmes références dans les figures.

### Description détaillée de l'invention

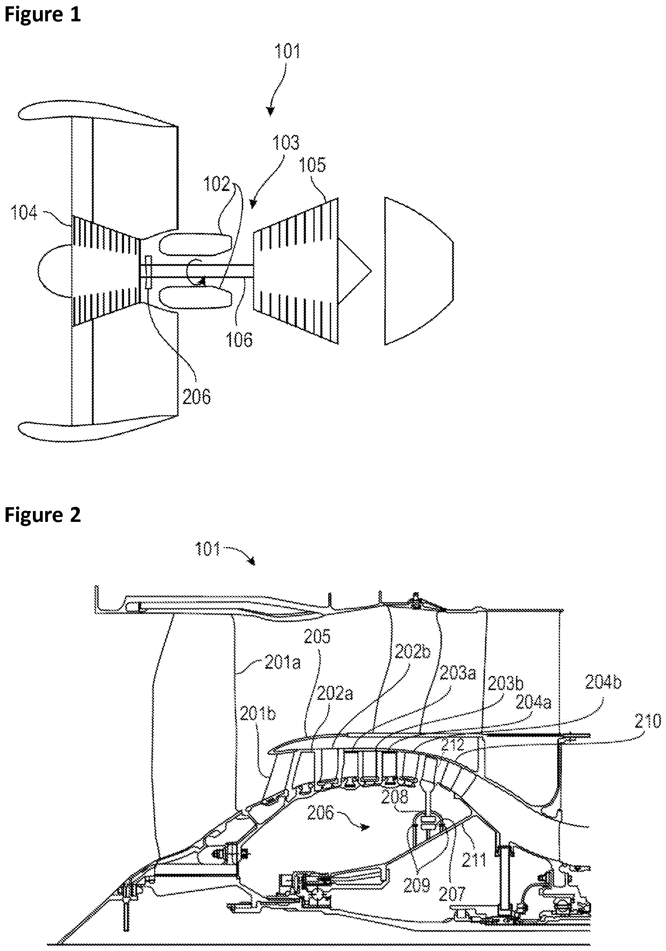

En référence à la figure 1 et à la figure 2, nous allons maintenant décrire une turbomachine d'aéronef selon un mode de réalisation de l'invention. Sur les représentations des figures 1 et 2, seul un corps basse pression est représenté. Toutefois, l'homme du métier appréciera que l'invention s'applique aussi à une turbomachine à double corps, c'est-à-dire une turbomachine qui comporte à la fois un corps basse pression, qui comprend une soufflante, un compresseur basse pression et une turbine basse pression, et un corps haute pression, qui comprend un compresseur haute pression et une turbine haute pression. En outre, une telle turbomachine peut être, par exemple, un turboréacteur à double corps et double flux (aussi appelé turbofan) pour lequel le corps basse pression et le corps haute pression sont situés dans la veine de circulation du flux primaire.

Dans ce qui suit les termes « amont » et « aval » sont définis en référence au sens d'écoulement des gaz dans la turbomachine.

La turbomachine d'aéronef 101 comporte une chambre de combustion 102 et un corps basse pression 103. Le corps basse pression 103 comprend, en amont de la chambre 102, un compresseur basse pression axial 104 qui est destiné à délivrer de l'air à la chambre et, en aval de la chambre, une turbine 105 qui reçoit les gaz chauds en provenance de la chambre et qui est destinée à entraîner le rotor 106 du compresseur. Dans l'exemple représenté à la figure 2, le compresseur comporte quatre étages de compression 201, 202, 203, 204 qui présentent chacun une première couronne d'aubes fixes 201b, 202b, 203b, 204b solidaires du carter 205 et une première couronne d'aubes mobiles 202a, 203a, 204a qui s'étendent radialement à la périphérie du rotor du compresseur. La soufflante 201a, située en amont du compresseur, entraîne le flux qui est redressé par la première couronne d'aubes fixes 201b. L'homme du métier appréciera cependant que l'invention n'est pas limitée à ce nombre d'étages et qu'elle s'applique de manière générale à une turbomachine d'aéronef dont le compresseur basse pression comporte au moins un étage de compression.

Dans tous les cas, la turbomachine comporte aussi, en aval du compresseur et en amont de la chambre, une machine électrique 206 qui est coaxiale au corps basse pression 103, dont le stator 207 est solidaire du carter 205 et dont le rotor 208 entraîne en rotation la couronne d'aubes mobiles 212. Cette machine électrique est configurée pour générer un flux d'air, par l'intermédiaire de la couronne d'aubes mobiles, lorsqu'elle est mise en rotation. En outre, le rotor de la machine électrique est guidé en rotation par des paliers 209 solidaires du carter (par l'intermédiaire de la virole 211) de sorte que la vitesse de rotation du rotor de la machine électrique est indépendante de la vitesse de rotation du rotor du compresseur. Dit autrement, la machine électrique peut être démarrée, arrêtée, accélérée ou ralentie quel que soit le régime de fonctionnement du compresseur basse pression. En outre, selon différents modes de réalisations de la turbomachine, le sens de rotation du rotor de la machine électrique peut être identique ou opposé à celui du rotor du compresseur basse pression.

Dans l'exemple représenté à la figure 2, une couronne d'aubes fixes 210 est située en aval et attenante à la seconde couronne d'aubes mobiles 212. Ces aubes fixes redressent le flux généré par les aubes mobiles. Ainsi, la machine électrique avec la couronne d'aubes mobiles et la couronne d'aubes fixes attenante peuvent être assimilées à un ultime étage autonome du compresseur basse pression. Comme il apparaîtra plus en détail plus loin, la vitesse de rotation du rotor de la machine électrique peut être commandé et régulée en fonction de paramètres choisis pour optimiser le fonctionnement aérodynamique de l'ensemble constitué par le compresseur basse pression et la machine électrique. La commande de la vitesse de rotation du rotor de la machine électrique permet ainsi une plus grande flexibilité d'utilisation de tout le compresseur basse pression.

Par ailleurs, dans le cas de figure d'une turbomachine à double corps, la machine électrique peut être alimentée, via une électronique de puissance, par un générateur entraîné par le corps haute pression.

Avantageusement, la meilleure maîtrise de l'écoulement des gaz que permet l'intégration de la machine électrique permet en conséquence de mieux éviter le phénomène de pompage. En outre, l'utilisation de la machine électrique permet aussi, le cas échéant, de maintenir un flux d'air, par exemple dans la veine primaire d'une turboréacteur à double flux, dans des phases dites de moteur (thermique) arrêté. Ce flux peut être utilisé par exemple, pour une fonction de maintenance liée au lavage d'un corps, pour aider au démarrage , pour générer de l'énergie en cas d'autorotation de la soufflante, ou pour refroidir le moteur entre deux vols successifs de manière à empêcher la déformation d'éléments du rotor liée à une surchauffe (qui impose un temps d'attente avant le redémarrage).

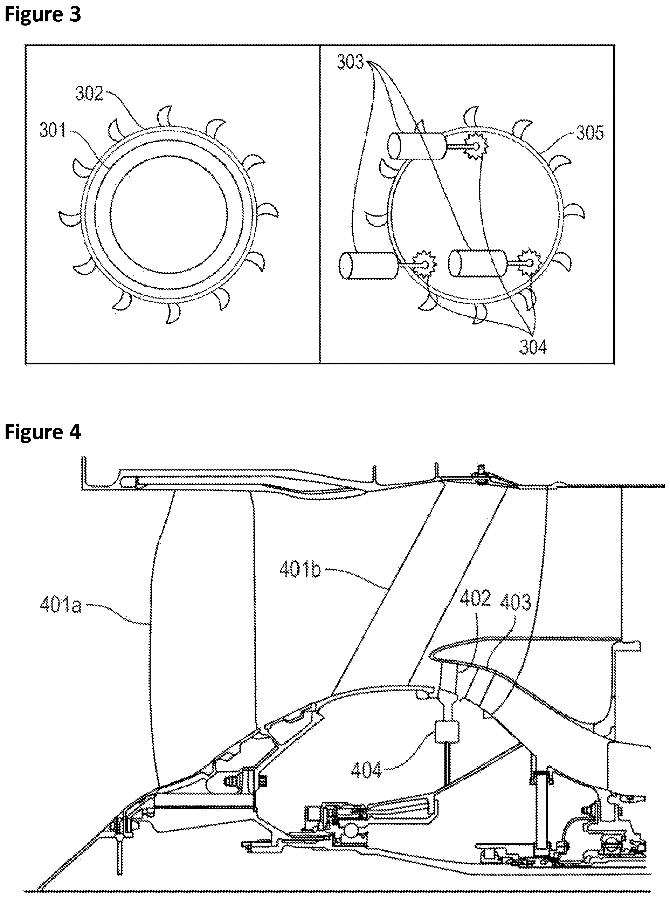

En référence à la figure 3, nous allons maintenant décrire des modes de réalisation de machines électriques selon l'invention.

La partie gauche de la figure 3 représente une machine électrique 301 de type annulaire, présentant un arbre creux à fort diamètre interne, qui est configuré pour entraîner en rotation la couronne d'aubes mobiles 302.

La partie droite de la figure 3 représente une pluralité de machines électriques 303 qui sont configurées pour mettre en rotation la couronne d'aubes mobiles 305, par l'intermédiaire des engrenages 304. Dans ce mode de réalisation, les machines électriques 303 sont parallèles au corps basse pression c'est-à-dire qu'elle s'étendent selon un axe qui est parallèle à l'axe d'étendue longitudinale du corps.

Selon le mode de réalisation de la ou des machines électriques, le ou les paliers qui guident le rotor de chaque machine peuvent être intégrés aux machines ou positionnés entre le rotor de la machine et un élément du carter de la turbomachine.

Les figures 4, 5 et 6 représentent différents modes de réalisation d'une turbomachine d'aéronef selon l'invention.

Dans le mode de réalisation représenté en référence à la figure 4, le compresseur basse pression ne comporte qu'un seul étage de compression 401 constitué d'une portion radiale de la soufflante 401a de la turbomachine et d'une couronne d'aubes fixes 401b. La machine électrique 404 est située en aval de cet étage de compression et une autre couronne d'aubes fixes 403 est située en aval et attenante à la couronne d'aubes mobiles 402. Avantageusement, ce mode de réalisation permet de conserver un taux de compression élevé dans une turbomachine dont le compresseur basse pression ne comporte qu'un étage de compression et pour laquelle il est complexe voire impossible d'intégrer un système du type vanne de décharge variable.

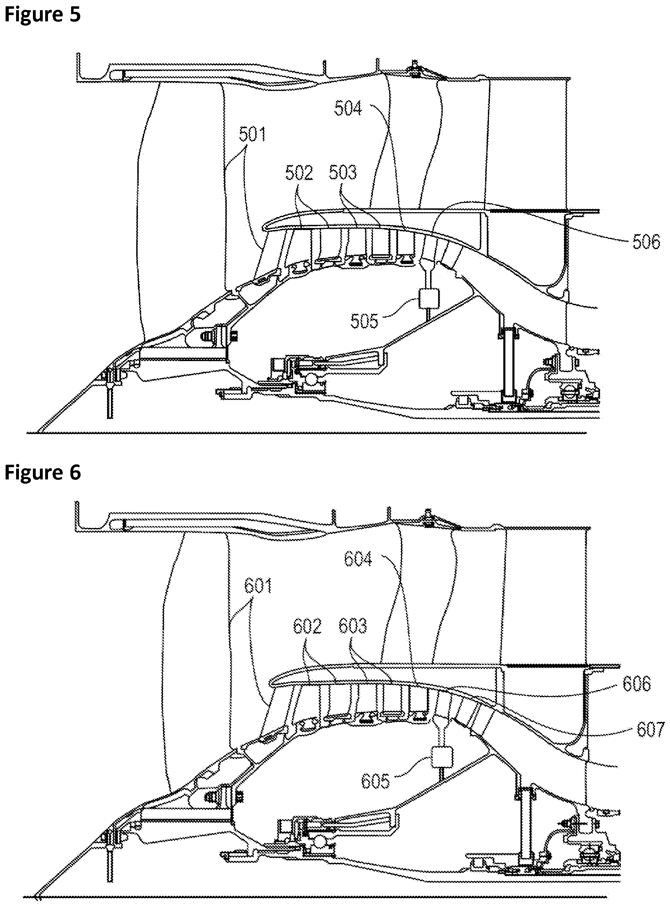

Dans le mode de réalisation représenté en référence à la figure 5, le compresseur basse pression comporte une pluralité d'étages de compression 501, 502, 503 et 504 avec chaque étage de compression qui comporte une couronne d'aubes mobiles. La machine électrique 505 est située en aval et attenante à la dernière couronne d'aubes mobiles 504 du compresseur (qui constitue son dernier étage de compression) et le sens de rotation du rotor de ladite machine électrique est opposé à celui du rotor du compresseur. Dans ce cas, la commande de la machine électrique est adaptée pour que la couronne d'aubes mobiles 506 minimise la giration de l'écoulement en sortie de la couronne d'aubes mobiles 504. Ceci permet de ne pas utiliser le redresseur (stator) situé en aval de ladite couronne d'aubes mobile 506.

Le dernier mode de réalisation, représenté en référence à la figure 6, reprend une architecture similaire au mode de réalisation représenté en référence à la figure 5 mais comprend en outre une couronne d'aubes fixes 607 située en aval et attenante à la couronne d'aubes mobiles 606. C'est cette couronne d'aubes mobiles qui redresse alors le flux.

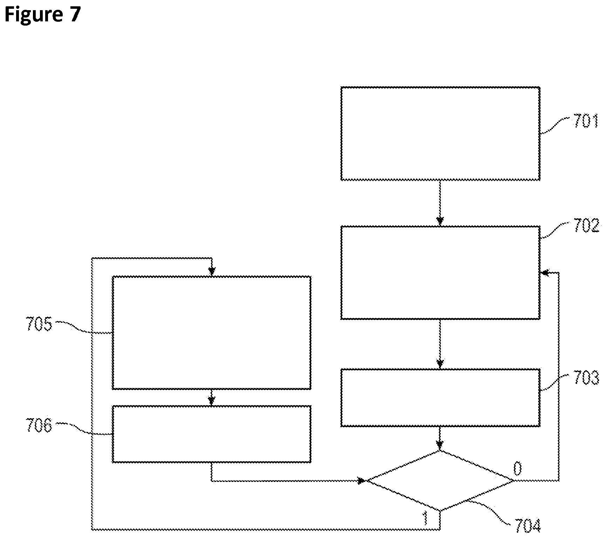

En référence à la figure 7, nous allons maintenant décrire un mode de mise en oeuvre d'un procédé de commande d'une machine électrique d'une turbomachine d'aéronef selon l'invention. Les étapes du procédé sont exécutées par une unité de commande. L'étape 701 consiste en la réception de données caractéristiques d'un point de fonctionnement de la turbomachine à un instant déterminé. Ces données caractéristiques peuvent être, par exemple, comprises parmi au moins une des données suivantes :
- le régime de fonctionnement du compresseur basse pression de la turbomachine ;
- le régime de fonctionnement du compresseur haute pression de la turbomachine ;
- la pression mesurée en entrée du compresseur haute pression de la turbomachine ;
- la pression mesurée en entrée du compresseur basse pression de la turbomachine ;
- la température mesurée en entrée du compresseur basse pression de la turbomachine ; et,
- la température mesurée en entrée du compresseur haute pression de la turbomachine. En outre, l'homme du métier saura sélectionner des données, par exemple mesurées par des capteurs ou déterminées à partir de la machine électrique, adaptées pour permettre une optimisation des performances aérodynamiques du compresseur basse pression grâce à la commande de la machine électrique.

L'étape 702 consiste en la détermination, à partir des données reçues, d'un régime de fonctionnement cible de la machine électrique. Par régime de fonctionnement cible on entend un régime de fonctionnement permettant d'optimiser l'écoulement du flux dans la veine aérodynamique et d'éviter le pompage.

L'étape 703 consiste en la détermination, à partir du régime de fonctionnement cible, d'une puissance cible de la machine électrique. Dit autrement, la puissance cible est la puissance qui correspond au régime de fonctionnement cible.

Lors de l'étape 704, l'unité de commande compare la puissance instantanée de la machine électrique et la puissance cible déterminée à l'étape 703.

Si la différence entre la puissance instantanée et la puissance cible est inférieure à un seuil déterminé, alors le procédé reprend à l'étape 702.

Sinon, l'étape 705 est réalisée. Cette étape consiste en la modification du régime de fonctionnement de la machine électrique dans le but d'atteindre la puissance cible. Enfin, l'étape 706 consiste en la détermination, de la puissance instantanée de la machine électrique et le retour à l'étape 704 pour comparer cette puissance avec la puissance cible à nouveau.

## Revendications

1. Turbomachine d'aéronef (101) comportant au moins une chambre de combustion (102) et un corps (103), en particulier basse pression, ledit corps comprenant, en amont de ladite chambre, un compresseur, en particulier basse pression, axial (104) destiné à délivrer de l'air à ladite chambre et, en aval de ladite chambre, une turbine (105) recevant des gaz chauds de ladite chambre et destinée à entraîner le rotor (106) dudit compresseur, ledit compresseur comportant au moins un étage de compression (201, 202, 203, 204) présentant une première couronne d'aubes fixes solidaires d'un carter (205) et une première couronne d'aubes mobiles s'étendant radialement à la périphérie dudit rotor du compresseur,
ladite turbomachine étant **caractérisée en ce qu'**elle comporte en outre, en aval dudit compresseur et en amont de ladite chambre, au moins une machine électrique (206) coaxiale ou parallèle audit corps, dont le stator (207) est solidaire dudit carter et dont le rotor (208) entraîne en rotation une seconde couronne d'aubes mobiles (212) configurée pour générer un flux d'air lorsqu'elle est mise en rotation, ledit rotor de la machine électrique étant en outre guidé en rotation par au moins un palier (209) solidaire dudit carter de sorte que la vitesse de rotation dudit rotor de la machine électrique est indépendante de la vitesse de rotation du rotor du compresseur.

2. Turbomachine selon la revendication 1, ladite turbomachine étant de type à double corps, et dans lequel un compresseur haute pression d'un corps haute pression est situé en aval du compresseur basse pression et de la machine électrique et en amont de la chambre de combustion, ladite turbomachine étant en outre à double flux avec le corps basse pression et le corps haute pression situés dans une veine de circulation d'un flux primaire.

3. Turbomachine selon la revendication 1 ou la revendication 2, dans laquelle la machine électrique (301) est de type annulaire et comporte un arbre creux configuré pour entraîner en rotation la seconde couronne d'aubes mobiles (302).

4. Turbomachine selon la revendication 1 ou la revendication 2, comportant une pluralité de machines électriques (303) configurées pour mettre en rotation, par l'intermédiaire d'engrenages (304), la seconde couronne d'aubes mobiles (305).

5. Turbomachine selon l'une quelconque des revendications 1 à 4, dans laquelle le compresseur comporte une pluralité d'étages de compression (201, 202, 203, 204), la machine électrique étant située en aval du dernier étage (204) dudit compresseur et en amont de la chambre de combustion, le rotor de la machine électrique tournant dans le même sens de rotation que le rotor dudit compresseur et une seconde couronne d'aubes fixes (210) étant située en aval et attenante à la seconde couronne d'aubes mobiles (209).

6. Turbomachine selon l'une quelconque des revendications 1 à 4, dans lequel le compresseur comporte un seul étage de compression (401) constitué d'une portion radiale d'une soufflante (401a) de la turbomachine, la machine électrique (404) étant située en aval dudit étage et une seconde couronne d'aubes fixes (403) étant située en aval et attenante à la seconde couronne d'aubes mobiles (402).

7. Turbomachine selon l'une quelconque des revendications 1 à 4, dans laquelle le compresseur comporte une pluralité d'étages de compression (501, 502, 503, 504), chaque étage de compression comportant une couronne d'aubes mobiles, la machine électrique (505) étant située en aval et attenante à la dernière couronne d'aubes mobiles (504) dudit compresseur et le sens de rotation du rotor de ladite machine électrique étant opposé à celui du rotor du compresseur.

8. Turbomachine selon la revendication 7, dans laquelle une seconde couronne d'aubes fixes (607) est située en aval et attenante à la seconde couronne d'aubes mobiles (606).

9. Procédé de commande d'une machine électrique d'une turbomachine d'aéronef selon l'une quelconque des revendications 1 à 8, ledit procédé comprenant les étapes suivantes, exécutées par une unité de commande :
a) réception (701) de données caractéristiques d'un point de fonctionnement de la turbomachine à un instant déterminé ;
b) détermination (702), à partir des données reçues, d'un régime de fonctionnement cible de la machine électrique ;
c) détermination (703), à partir du régime de fonctionnement cible, d'une puissance cible de la machine électrique ;
d) comparaison (704) de la puissance instantanée de la machine électrique et de la puissance cible déterminée et, si la différence entre la puissance instantanée et la puissance cible est inférieure à un seuil déterminé, retour à l'étape b), sinon,
e) modification (705) du régime de fonctionnement de la machine électrique destinée à atteindre la puissance cible ; et,
f) détermination (706), de la puissance instantanée de la machine électrique et retour à l'étape d).

10. Procédé selon la revendication 9, quand elle dépend de la revendication 2, dans lequel les données caractéristiques d'un point de fonctionnement de la turbomachine comprennent, au moins l'une des données suivantes :
- le régime de fonctionnement du compresseur basse pression de la turbomachine ;
- le régime de fonctionnement du compresseur haute pression de la turbomachine ;
- la pression mesurée en entrée du compresseur haute pression de la turbomachine ;
- la pression mesurée en entrée du compresseur basse pression de la turbomachine ;
- la température mesurée en entrée du compresseur basse pression de la turbomachine ; et,
- la température mesurée en entrée du compresseur haute pression de la turbomachine.

## Patentansprüche

1. Turbotriebwerk eines Luftfahrzeugs (101), das mindestens eine Verbrennungskammer (102) und einen insbesondere Niederdruck-Körper (103) umfasst, wobei der Körper stromaufwärts der Kammer einen axialen, insbesondere Niederdruck-Verdichter (104) umfasst, der dazu bestimmt ist, Luft an die Kammer abzugeben und, stromabwärts der Kammer eine Turbine (105), die heiße Gase aus der Kammer aufnimmt, und dazu bestimmt ist, den Rotor (106) des Verdichters anzutreiben, wobei der Verdichter mindestens eine Verdichtungsstufe (201, 202, 203, 204) umfasst, die einen ersten Ring mit festen Schaufeln aufweist, die fest mit einem Gehäuse (205) verbunden sind, und einen ersten Ring mit beweglichen Schaufeln, die sich radial an der Peripherie des Rotors des Verdichters erstrecken,
wobei das Turbotriebwerk **dadurch gekennzeichnet ist, dass** es weiter stromabwärts des Verdichters und stromaufwärts der Kammer, mindestens eine elektrische Maschine (206) koaxial und parallel zum Körper umfasst, deren Stator (207) fest mit dem Gehäuse verbunden ist, und deren Rotor (208) einen zweiten Ring mit beweglichen Schaufeln (212) in Drehung antreibt, der konfiguriert ist, um einen Luftstrom zu generieren, wenn er in Drehung versetzt wird, wobei der Rotor der elektrischen Maschine weiter durch mindestens ein Lager (209) drehend geführt wird, das fest mit dem Gehäuse verbunden ist, sodass die Drehgeschwindigkeit des Rotors der elektrischen Maschine unabhängig von der Drehgeschwindigkeit des Rotors des Verdichters ist.

2. Turbotriebwerk nach Anspruch 1, wobei das Turbotriebwerk in der Art mit einem Doppelkörper ist, und wobei sich ein Hochdruck-Verdichter eines Hochdruckkörpers stromabwärts des Niederdruck-Verdichters und der elektrischen Maschine und stromaufwärts der Verbrennungskammer befindet, wobei das Turbotriebwerk weiter mit Doppelstrom mit dem Niederdruckkörper und dem Hochdruckkörper ist, die sich in einem Zirkulationsgang eines Primärstroms befinden.

3. Turbotriebwerk nach Anspruch 1 oder Anspruch 2, wobei die elektrische Maschine (301) der ringförmigen Art ist, und eine Hohlwelle umfasst, die konfiguriert ist, um den zweiten Ring mit beweglichen Schaufeln (302) anzutreiben.

4. Turbotriebwerk nach Anspruch 1 oder Anspruch 2, das eine Vielzahl von elektrischen Maschinen (303) umfasst, die konfiguriert sind, um anhand von Verzahnungen (304) den zweiten Ring mit beweglichen Schaufeln (305) anzutreiben.

5. Turbotriebwerk nach einem der Ansprüche 1 bis 4, wobei der Verdichter eine Vielzahl von Verdichtungsstufen (201, 202, 203, 204) umfasst, wobei sich die elektrische Maschine stromabwärts der letzten Stufe (204) des Verdichters und stromaufwärts der Verbrennungskammer befindet, wobei sich der Rotor der elektrischen Maschine in dieselbe Drehrichtung dreht, wie der Rotor des Verdichters und sich ein zweiter Ring mit festen Schaufeln (210) stromabwärts und an den zweiten Ring mit beweglichen Schaufeln (209) angrenzend befindet.

6. Turbotriebwerk nach einem der Ansprüche 1 bis 4, wobei der Verdichter eine einzige Verdichtungsstufe (401) umfasst, die aus einem radialen Abschnitt eines Gebläses (401a) des Turbotriebwerks besteht, wobei sich die elektrische Maschine (404) stromabwärts der Stufe befindet und sich ein zweiter Ring mit festen Schaufeln (403) stromabwärts und an den zweiten Ring mit beweglichen Schaufeln (402) angrenzend befindet.

7. Turbotriebwerk nach einem der Ansprüche 1 bis 4, wobei der Verdichter eine Vielzahl von Verdichtungsstufen (501, 502, 503, 504) beinhaltet, wobei jede Verdichtungsstufe einen Ring mit beweglichen Schaufeln umfasst, wobei sich die elektrische Maschine (505) stromabwärts und an den letzten Ring mit beweglichen Schaufeln (504) des Verdichters angrenzend befindet, und die Drehrichtung des Rotors der elektrischen Maschine entgegengesetzt zu jener des Rotors des Verdichters ist.

8. Turbotriebwerk nach Anspruch 7, wobei sich der zweite Ring mit festen Schaufeln (607) stromabwärts und an den zweiten Ring mit beweglichen Schaufeln (606) angrenzend befindet.

9. Verfahren zum Steuern einer elektrischen Maschine eines Turbotriebwerk eines Luftfahrzeugs nach einem der Ansprüche 1 bis 8, wobei das Verfahren die folgenden Schritte umfasst, die von einer Steuereinheit ausgeführt werden:
a) Empfangen (701) von charakteristischen Daten eines Betriebspunktes des Turbotriebwerks zu einem bestimmten Zeitpunkt;
b) Bestimmen (702) aus den empfangenen Daten einer Zielbetriebsbedingung der elektrischen Maschine;
c) Bestimmen (703) aus der Zielbetriebsbedingung einer Zielleistung der elektrischen Maschine;
d) Vergleichen (704) der momentanen Leistung der elektrischen Maschine und der bestimmten Zielleistung, und, wenn die Differenz zwischen der momentanen Leistung und der Zielleistung kleiner als eine bestimmte Schwelle ist, Rückkehr zum Schritt b), ansonsten,
e) Ändern (705) der Betriebsbedingung der elektrischen Maschine, die dazu bestimmt ist, die Zielleistung zu erreichen; und,
f) Bestimmen (706) der momentanen Leistung der elektrischen Maschine und Rückkehr zum Schritt d).

10. Verfahren nach Anspruch 9, wenn von Anspruch 2 abhängig, wobei die charakteristischen Daten eines Betriebspunkts des Turbotriebwerks mindestens eines aus den folgenden Daten umfassen:
- die Betriebsbedingung des Niederdruck-Verdichters des Turbotriebwerks;
- die Betriebsbedingung des Hochdruck-Verdichters des Turbotriebwerks;
- den am Eingang des Hochdruck-Verdichters des Turbotriebwerks gemessenen Druck;
- den am Eingang des Niederdruck-Verdichters des Turbotriebwerks gemessenen Druck;
- die am Eingang des Niederdruck-Verdichters des Turbotriebwerks gemessene Temperatur; und
- die am Eingang des Hochdruck-Verdichters des Turbotriebwerks gemessene Temperatur.

## Claims

1. An aircraft turbine engine (101) comprising at least one combustion chamber (102) and a body (103), in particular a low-pressure body, said body comprising, upstream of said chamber, an axial compressor (104), in particular low-pressure, intended to deliver air to said chamber and, downstream of said chamber, a turbine (105) receiving hot gases from said chamber and intended to drive the rotor (106) of said compressor, said compressor comprising at least one compression stage (201, 202, 203, 204) having a first stationary vane ring secured to a casing (205) and a first movable vane ring extending radially at the periphery of said rotor of the compressor,
said turbine engine being **characterised in that** it furthermore comprises, downstream of said compressor and upstream of said chamber, at least one electric machine (206) which is coaxial or parallel to said body, the stator (207) of which is secured to said casing and the rotor (208) of which drives in rotation a second movable vane ring (212) configured so as to generate a flow of air when it is rotated, said rotor of the electric machine being furthermore guided in rotation by at least one bearing (209) secured to said casing so that the speed of rotation of said rotor of the electric machine is independent of the speed of rotation of the rotor of the compressor.

2. The turbine engine according to claim 1, said turbine engine being of the dual-body type, and wherein a high-pressure compressor of a high-pressure body is located downstream of the low-pressure compressor and of the electric machine and upstream of the combustion chamber, said turbine engine further being double-flow with the low-pressure body and the high-pressure body located in a flow duct of a primary flow.

3. The turbine engine according to claim 1 or claim 2, wherein the electric machine (301) is of the annular type and comprises a hollow shaft configured to drive the second movable vane ring (302) in rotation.

4. The turbine engine according to claim 1 or claim 2, comprising a plurality of electric machines (303) configured to rotate, by means of gears (304), the second movable vane ring (305).

5. The turbine engine according to any one of claims 1 to 4, wherein the compressor comprises a plurality of compression stages (201, 202, 203, 204), the electric machine being located downstream of the last stage (204) of said compressor and upstream of the combustion chamber, the rotor of the electric machine rotating in the same direction of rotation as the rotor of said compressor, and a second stationary vane ring (210) being located downstream of and adjacent to the second movable vane ring (209).

6. The turbine engine according to any one of claims 1 to 4, wherein the compressor comprises a single compression stage (401) constituted by a radial segment of a fan (401a) of the turbine engine, the electric machine (404) being located downstream of said stage and a second stationary vane ring (403) being located downstream of and adjacent to the second movable vane ring (402).

7. The turbine engine according to any one of claims 1 to 4, wherein the compressor comprises a plurality of compression stages (501, 502, 503, 504), each compression stage comprising a movable vane ring, the electric machine (505) being located downstream of and adjacent to the last movable vane ring (504) of said compressor and the direction of rotation of the rotor of said electric machine being opposite to that of the rotor of the compressor.

8. The turbine engine of claim 7, wherein a second stationary vane ring (607) is located downstream of and adjacent to the second movable vane ring (606).

9. A method for controlling an electric machine of an aircraft turbine engine according to any one of claims 1 to 8, said method comprising the following steps, executed by a control unit:
a) receiving (701) characteristic data of an operating point of the turbine engine at a given time;
b) determining (702), from the received data, a target operating regime of the electric machine;
c) determining (703), from the target operating regime, a target power of the electric machine;
d) comparing (704) the instantaneous power of the electric machine and the determined target power and, if the difference between the instantaneous power and the target power is less than a determined threshold, returning to the step b),
otherwise,
e) changing (705) the operating regime of the electric machine intended to achieve the target power; and,
f) determining (706) the instantaneous power of the electric machine and returning to the step d).

10. The method according to claim 9, when dependent on claim 2, wherein the characteristic data of an operating point of the turbine engine comprises, at least one of the following data:
- the operating regime of the low-pressure compressor of the turbine engine;
- the operating regime of the high-pressure compressor of the turbine engine;
- the pressure measured at the inlet of the high-pressure compressor of the turbine engine;
- the pressure measured at the inlet of the low-pressure compressor of the turbine engine;
- the temperature measured at the inlet of the low-pressure compressor of the turbine engine; and,
- the temperature measured at the inlet of the high-pressure compressor of the turbine engine.
